# EUROPÄISCHE PATENTSCHRIFT

(11) **EP 1 391 368 B1**
(45) Veröffentlichungstag und Bekanntmachung des Hinweises auf die Patenterteilung: **07.11.2007**
(21) Anmeldenummer: 03011970.5
(22) Anmeldetag: 28.05.2003
(51) Int. Cl.: B62D 21/02

(54) **Aufbaustruktur für ein Kraftfahrzeug**
Frame structure for a motor vehicle
Structure de châssis pour véhicule automobile

(30) Priorität: 20.08.2002 DE 10237962
(43) Veröffentlichungstag der Anmeldung: 25.02.2004
(73) Patentinhaber: Dr.Ing. h.c. F. Porsche Aktiengesellschaft, 70435 Stuttgart (DE)
(72) Erfinder: Stahl, Rainer, 74372 Sersheim (DE)

(56) Entgegenhaltungen:
- BE-A- 722 601
- US-A- 6 146 565

## Beschreibung

Die Erfindung bezieht sich auf eine Aufbaustruktur für ein Kraftfahrzeug nach dem Oberbegriff des Anspruchs 1.

Bei Fahrzeugen, insbesondere Geländefahrzeugen tritt das Problem auf, dass über den Längsträger der Aufbaustruktur Wasser über einen Sitzquerträger in einen außenliegenden Schweller gelangen kann.

Die Aufgabe der Erfindung besteht darin, eine Aufbaustruktur, insbesondere eine Abdichtung in der Aufbaustruktur zu schaffen, die einen Wassereintritt in den seitlichen Außenschweller des Fahrzeugs verhindert.

Ein Schottteil ist bekannt zum Beispiel aus US 6146565. Korrosionsschutz in Sitzquerträger und Schweller durch eine volständige Schaumfallung ist bekannt aus BE 722601.

Diese Aufgabe wird erfindungsgemäß bei einer Aufbaustruktur durch die Merkmale des Patentanspruchs 1 gelöst. Weitere vorteilhafte Merkmale beinhalten die Unteransprüche.

Die mit der Erfindung hauptsächlich erzielten Vorteile bestehen darin, dass mittels eines sog. Schottteils eine Abdichtung gegen ein Wassereintritt in den Schweller geschaffen wird. Dieser ist zwischen einer dem Schweller zugekehrten Abstellung des Längsträgers und dem Sitzquerträger angeordnet. Durch das Schottteil wird die Durchtrittsfläche von der Abstellung des Längsträgers und dem U - Profil des Sitzquerträgers wasserdicht abgeschlossen.

Das Schottteil ist im Einbauzustand in einer vertikalen Ebene angeordnet und besteht aus einem Grundträger mit einem umgebenden Quellschaum, der beabstandet in der Durchtrittsfläche angeordnet ist. Dieser Quellschaum umgibt den Grundträger und nach dem Befestigungen beispielsweise über eine Klipsverbindung, kann der Schaum durch Wärme oder dgl. so weit aufquellen, dass die Durchtrittsfläche im Sitzquerträger zum Seitenschweller wasserdicht abgeschlossen ist.

Ein Ausführungsbeispiel, der Erfindung ist in den Zeichnungen dargestellt und wird im folgenden näher beschrieben.

Es zeigen:
- Fig. 1: eine schaubildliche Darstellung eines Teiles eines Längsträgers der Aufbaustruktur mit einem darüber angeordneten Sitzquerträger, der endseitig mit einem Seitenschweller verbunden ist und
- Fig. 2: einen Schnitt nach der Linie II - II der Fig. 2 durch den Sitzquerträger und den Längsträger.

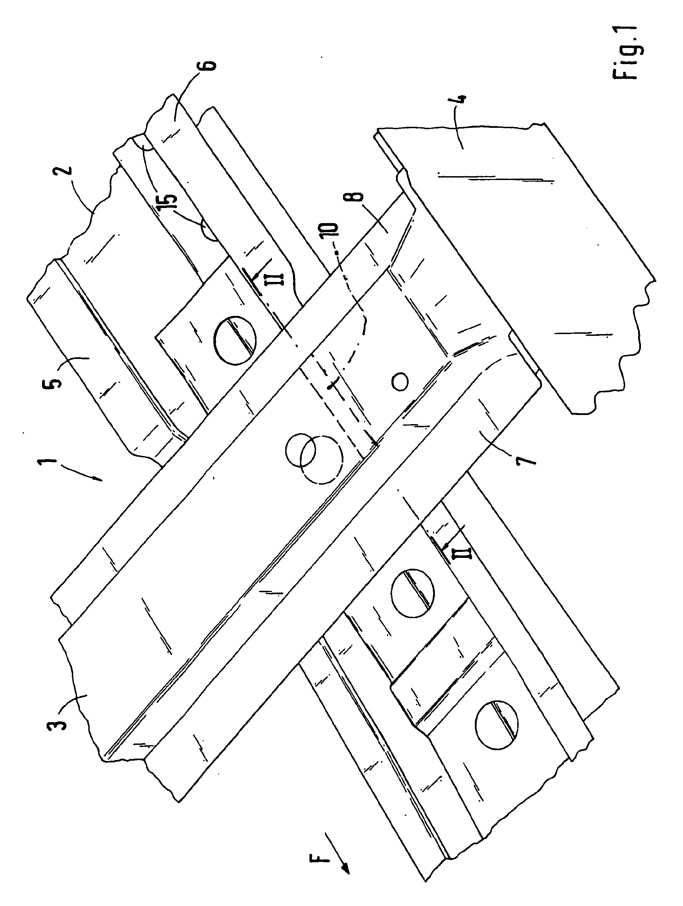

In Fig. 1 ist von einer Fahrzeugstruktur 1 ein Teil eines Längsträgers 2 mit einem Teil eines Sitzquerträgers 3 und einem Teil eines Seitenschwellers 4 eines Fahrzeugs dargestellt. In Fahrtrichtung F gesehen, ist die linke Seite der Struktur 1 gezeigt.

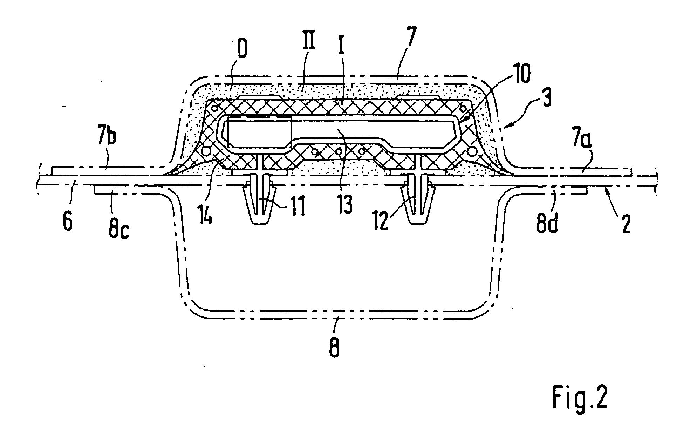

Der Längsträger 2 besteht im wesentlichen aus einem U - Profil mit Abstellungen 5 und 6, auf denen der Sitzquerträger 3 abgestützt ist. Dieser besteht aus einem oberen und einem unteren U - Profil 7 und 8, deren Abstellungen 7a, 7b und 8c, 8d aufeinander liegen, was in Fig. 2 näher dargestellt ist. In Fig. 1 ist das unten liegende U - Profil 8 des Sitzquerträgers 3 nicht dargestellt.

Zischen der Abstellung 6 des Längsträgers 2 und dem oben liegenden U - Profil 7 des Sitzquerträgers 3 ist ein Schottteil 10 angeordnet, das über Klipse 11, 12 mit der Abstellung 6 des Längsträgers 2 verbunden ist.

Dieses Schottteil 10 umfasst einen Grundträger 13, der von einem aufquellenden Schaumteil 14 umgeben ist. Dieses Schaumteil 14 ist in Fig. 2 im Einsetzzustand I (gekreuzte Linien) gezeigt. Im aufgequollenen Zustand II (gepunktete Fläche) legt sich der Schaum unmittelbar an die Innenwandung des Profils 7 des Sitzquerträgers 3 und der Fläche der Abstellung 6 des Längsträgers 2 an, so dass die Durchtrittsfläche D rundum dicht abgeschlossen ist und somit kein Wasser vom Längsträger 2 aus in den Schweller 4 mehr gelangen kann. Der Wassereintritt in den Längsträger 2 kann über die Öffnungen 15 erfolgen und von hier aus über den Sitzquerträger 3 durch die Schweißungen in den Schweller 4.

Das Schaumteil 14 wird durch Wärmeeinwirkung zum Aufquellen gebracht und es wird sicher gestellt, dass die Abdichtung im Zustand II absolut wasserdicht und dauerhaft ist.

## Patentansprüche

1. Aufbaustruktur für ein Kraftfahrzeug, mit Längsträger, Schwellern und mit einem Sitzquerträger der querverlaufend zum Längsträger und äußeren Schwellern angeordnet und mit diesem verbunden ist und der Längsträger aus einem U - Profil mit Abstellungen besteht, die als obenseitige Abstützung für den aus einem U - Profil bestehenden Sitzquerträger ausgeführt und der stirnseitig jeweils mit dem Schweller verbunden ist, **dadurch gekennzeichnet, dass** zwischen einer dem Schweller (4) zugerichteten Abstellung (6) des Längsträgers (2) und dem Sitzquerträger (3) ein Schotteil (10) angeordnet ist, das die von der Abstellung (6) und dem U - Profil des Sitzquerträgers (3) gebildete Durchtrittsfläche (D) wasserdicht abschließt.

2. Aufbaustruktur nach Anspruch 1, **dadurch gekennzeichnet, dass** das Schottteil (10) im Einbauzustand (I) aus einem in einer vertikalen Ebene angeordneten Grundträger (13) mit einem umgebenden Quellschaum (14) ausgeführt ist, der beabstandet in der Durchtrittsfläche (D) der Profilteile (2 und 3) angeordnet ist.

3. Aufbaustruktur nach den Ansprüchen 1 oder 2, **dadurch gekennzeichnet, dass** die Durchtrittsfläche (D) im Endzustand (11) rundum mit dem Quellschaum (14) dichtend ausgefüllt ist.

4. Aufbaustruktur nach den Ansprüchen 1, 2 oder 3, **dadurch gekennzeichnet, dass** der Grundträger (13) mit der- Abstellung (6) des Längsträgerprofils (2) über Befestigungselemente (11, 12) verbunden ist.

5. Aufbaustruktur nach Anspruch 4, **dadurch gekennzeichnet, dass** die Befestigungselemente (11, 12) aus Klipsen bestehen.

## Claims

1. A body structure for a motor vehicle, with a longitudinal beam, sills and a seat cross beam which is arranged so as to extend transversely to the longitudinal beam and the outer sills and is connected to the longitudinal beam, and the longitudinal beam consists of a U-section with shoulders which are constructed as an upper support for the-seat cross beam, which consists of a U-section and is connected at its ends to the respective sill, **characterised in that** a partition part (10) is arranged between a shoulder (6) of the longitudinal beam (2) and the seat cross beam (3) and seals the passage area (D) formed by the shoulder (6) and the U-section of the seat cross beam (3) in a water-tight manner, the shoulder (6) being directed towards the sill (4).

2. A body structure according to claim 1, **characterised in that**, in the installation state (I), the partition part (10) is constructed from a basic support (13) which is arranged in a vertical plane and is provided with a surrounding expansion foam (14) arranged with spacing in the passage area (D) of the sectional parts (2 and 3).

3. A body structure according to claim 1 or claim 2, **characterised in that**, in the end state (II), the passage area (D) is completely filled with the expansion foam (14) so as to form a seal.

4. A body structure according to claim 1, 2 or 3, **characterised in that** the basic support (13) is connected to the shoulder (6) of the longitudinal beam section (2) by fastening members (11, 12).

5. A body structure according to claim 4, **characterised in that** the fastening members (11, 12) consist of clips.

## Revendications

1. Structure de châssis de véhicule automobile comportant un longeron, des seuils de porte et une traverse support de siège placée transversalement au longeron et aux seuils de porte longitudinaux extérieurs et reliée à celui-ci et le longeron est composé d'un profilé en U avec des butées qui est réalisé comme appui supérieur pour la traverse support de siège composée d'un profilé en U et est relié respectivement côté avant au seuil de porte, **caractérisée en ce qu'**entre une butée (6) du longeron (2) tournée contre le seuil de porte (4) et la traverse support de siège (3), une pièce étanche (10) est placée qui rend étanche à l'eau la surface de passage (D) formée par la butée (6) et le profilé en U de la traverse support de siège (3).

2. Structure de châssis selon la revendication 1, **caractérisée en ce que** la pièce étanche (10) dans l'état monté (I) est réalisée à partir d'un support de base (13) placé dans un plan vertical avec une mousse gonflante (14) qui l'entoure qui est placée à distance dans la surface de passage (D) des parties de profilé (2 et 3).

3. Structure de châssis selon l'une des revendications 1 ou 2, **caractérisée en ce que** la surface de passage (D) dans l'état final (II) est totalement remplie de manière étanche par la mousse gonflante (14).

4. Structure de châssis selon l'une des revendications 1, 2 ou 3, **caractérisée en ce que** le support de base (13) est relié à la butée (6) du profilé du longeron (2) par des éléments de fixation (11, 12).

5. Structure de châssis selon la revendication 4, **caractérisée en ce que** les éléments de fixation (11, 12) sont composés de clips.
